# EUROPEAN PATENT SPECIFICATION

(11) **EP 2 461 395 B1**
(45) Date of publication and mention of the grant of the patent: **23.01.2019**
(21) Application number: 10794340.9
(22) Date of filing: 29.06.2010
(51) Int. Cl.: H01M 4/04, H01M 10/0525, C23C 18/12, H01G 11/24, H01G 11/28, H01G 11/46, H01G 11/50, H01M 2/16, H01M 4/13, H01M 4/139

(54) **METHOD FOR MANUFACTURING AN ELECTRODE HAVING A POROUS COATING LAYER**
VERFAHREN ZUR HERSTELLUNG EINER ELEKTRODE MIT EINER PORÖSEN BESCHICHTUNG
PROCÉDÉ DE FABRICATION D'UNE ÉLECTRODE POSSÉDANT UNE COUCHE DE REVÊTEMENT POREUSE

(30) Priority: 30.06.2009 KR 20090058977; 29.06.2010 KR 20100061845
(43) Date of publication of application: 06.06.2012
(73) Proprietor: LG Chem, Ltd., Seoul 07336 (KR)
(72) Inventor: LEE, Joo-Sung, Daejeon 305-727 (KR); KIM, Jong-Hun, Daejeon 302-120 (KR); PARK, Pil-Kyu, Daejeon 301-817 (KR); HONG, Jang-Hyuk, Daejeon 302-782 (KR); SHIN, Byoung-Jin, Daejeon 305-738 (KR); CHO, Byeong-Gyu, Daejeon 305-727 (KR); JIN, Sun-Mi, Daejeon 305-761 (KR); KIM, In-Chul, Seoul 150-721 (KR); YOON, Su-Jin, Daejeon 301-787 (KR)
(74) Representative: Hoffmann Eitle
(86) International application number: PCT/KR2010/004215
(87) International publication number: WO 2011/002205

(56) References cited:
- WO-A2-2008/111960
- JP-A- 2008 181 879
- KR-A- 20080 098 261
- US-A1- 2004 224 234
- US-A1- 2009 092 900
- US-A1- 2009 162 750
- US-B1- 6 200 706
- DATABASE WPI Week 200749 Thomson Scientific, London, GB; AN 2007-500935 XP002725134, -& JP 2007 092210 A (TEIJIN LTD) 12 April 2007 (2007-04-12)
- MANEERATANA ET AL: "Continuous hollow alumina gel fibers by direct electrospinning of an alkoxide-based precursor", CHEMICAL ENGINEERING JOURNAL, ELSEVIER SEQUOIA, LAUSANNE, CH, vol. 137, no. 1, 13 February 2008 (2008-02-13), pages 137-143, XP022481094, ISSN: 1385-8947, DOI: 10.1016/J.CEJ.2007.09.013

## Description

### TECHNICAL FIELD

The present invention relates to a method for manufacturing an electrode for an electrochemical device such as a lithium secondary battery. More particularly, the present invention relates to a method for manufacturing an electrode having an inorganic material-containing porous coating layer.

### BACKGROUND ART

Recently, there has been an increasing interest in energy storage technologies. As electrochemical devices have been widely used as energy sources in the fields of mobile phones, camcorders, notebook computers and even electric vehicle, research and development has been increasingly made on the electrochemical devices. Among the electrochemical devices, rechargeable secondary batteries are particularly the center of attention. Recent trends of research and development move toward new designs of electrodes and batteries to improve capacity density and specific energy.

Among currently available secondary batteries, lithium secondary batteries that were developed in early 1990's have a higher operating voltage and a much higher energy density than conventional batteries using a liquid electrolyte, such as Ni-MH batteries, Ni-Cd batteries, H₂SO₄-Pb batteries, and the like. These characteristics of the lithium secondary batteries afford advantages. However, the lithium secondary batteries have disadvantages such as a complex manufacturing process and safety-related problems caused by use of an organic electrolyte, for example, firing, explosion, and the like. Under these circumstances, lithium-ion polymer batteries developed to overcome the drawbacks of lithium ion batteries are considered as one of next-generation batteries. However, lithium-ion polymer batteries have a relatively lower battery capacity than lithium ion batteries, and have an insufficient discharging capacity at low temperature. Accordingly, there is an urgent need to solve these disadvantages of the lithium-ion polymer batteries.

A variety of electrochemical devices have been produced from many companies, and each exhibits different safety characteristics. Thus, it is important to evaluate and ensure safety of electrochemical devices. First of all, electrochemical devices should not cause any damage to users in case of malfunction. Taking this into account, safety regulations strictly prohibit safety-related accidents of electrochemical devices such as firing or smoke emission. According to the safety characteristics of electrochemical devices, explosion may occur when an electrochemical device is overheated and subject to thermal runaway and when a separator is punctured. In particular, a short circuit may occur between a cathode and an anode, when a polyolefin-based porous substrate that is commonly used as a separator of the electrochemical devices shows a significant thermal shrinking behavior at a temperature of 100°C or above due to its material characteristics and manufacturing characteristics such as elongation.

In order to solve the above safety-related problems of electrochemical devices, an electrode has been suggested in which a porous coating layer made from a mixture of binder polymer and an excessive amount of inorganic particles is formed on at least one surface of a porous substrate having a plurality of pores. The inorganic particles contained in the porous coating have high heat resistance, and when an electrochemical device is overheated, the inorganic particles may prevent a short circuit between an anode and a cathode. As a result, electrochemical devices having such an electrode may eliminate the need of a conventional separator or may improve thermal stability.

An electrode having the porous coating layer is manufactured by dispersing an excessive amount of inorganic particles in a solution having binder polymer dissolved therein, and coating the dispersion solution on an outer surface of an electrode active material layer, followed by drying. For a good operation of electrochemical devices, it requires a uniform dispersion of pores in the porous coating layer. That is, an excessive amount of inorganic particles in the porous coating layer should be uniformly dispersed. For a uniform dispersion, many attempts have been made to disperse the inorganic particles for a long time using physical agitation, ultrasonic dispersion, and the like, after adding the inorganic particles to the binder polymer solution. However, even inorganic particles uniformly dispersed using the above methods may agglomerate with each other during a solvent drying process. For this reason, it is very difficult to manufacture a porous coating layer having an excessive amount of inorganic particles uniformly dispersed therein. This also works on electrospraying of a polymer solution having uniformly dispersed inorganic particles.

US-A-2009/0092900 discloses a battery separator comprising a polyolefin layer and a heat-resistant insulating layer formed on one or both sides of the polyolefin layer, the insulating layer comprising a heat-resistant resin and oxidation-resistant ceramic particles in an amount of 60-90%.

US-A-2004/0224234 discloses a process for the production of a composite article suitable for use in an electrochemical device. The composite article comprises a substrate, a separator comprising solid particles and a polymeric composition, a negative electrode layer, and a positive electrode layer.

JP-A-2007-092210 teaches a method for producing a fibrous structure by an electrospinning process, involving using a fabric comprising fibers containing an electrically conductive substance and having a diameter of 1-20 µm as a base material for gathering spun yarns.

Maneeratana, et al. (Chemical Engineering Journal 137 (2008) 137-143) disclose the production of ceramic fibers of hydrous alumina by direct electrospinning of an alkoxide-based precursor.

WO2008/111960 discloses the production of an electrode by electrospinning directly onto an electrode surface. This is achieved by electrospinning a solution containing a polymer and an alumina reagent.

### DISCLOSURE OF INVENTION

### Technical Problem

An object of the invention is to provide a method for manufacturing an electrode with an inorganic material-containing porous coating layer having uniformly dispersed pores, as opposed to a conventional electrode with an inorganic particles-containing porous coating layer.

### Technical Solution

In order to achieve the above object, the present invention provides a method for manufacturing an electrode, the method comprising: (S1) preparing a sol solution from a metal alkoxide compound; and (S2) locating an electrode on a substrate of an electroemitting apparatus, and forming a porous, non-woven coating layer of an inorganic fiber by electroemitting the sol solution onto an outer surface of an electrode active material layer formed on at least one surface of a current collector of the electrode.

The metal alkoxide compound may include a silicon-containing alkoxide, aluminum-containing alkoxide or titanium-containing alkoxide, singularly or in combination. A metal of the metal alkoxide compound may be partially substituted by alkali metals or alkaline earth metals such as lithium, magnesium, barium, and the like, or transition metals such as cobalt, manganese, iron, nickel, vanadium, and the like.

The silicon-containing alkoxide may be tetra-alkyl-ortho-silicate (having 1 to 4 carbon atoms), the aluminum-containing alkoxide may be aluminum-sec-butoxide, aluminum isopropoxide, or aluminum ethoxide, and the titanium-containing alkoxide may be titanium isopropoxide or titanium alkyl alkoxide (having 1 to 4 carbon atoms).

The sol solution may further contain a binder, for example, at least one selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyvinylalcohol, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, and a low-molecular-weight compound having a molecular weight of 10,000 g/mol or less.

After the (S2) step, the method may further include performing a thermal treatment to separate the binder from the porous, non-woven coating layer.

The electroemitting may be electrospinning or electrospraying.

Another aspect is an electrochemical device comprising a cathode and an anode, one or both of which is an electrode obtainable by a method as defined above and comprises: (a) a current collector and an electrode active material layer formed on at least one surface of the current collector; and (b) a porous, non-woven coating layer of an inorganic fiber formed on an outer surface of the electrode active material layer; wherein the porous, non-woven coating layer is interposed between the cathode and the anode.

The inorganic fiber may be formed from an inorganic oxide, such as SiO₂, Al₂O₃, BaTiO₃, TiO₂, and the like, singularly or in combination, and a metal of the inorganic oxide may be partially substituted by alkali metals or alkaline earth metals such as lithium, magnesium, barium, and the like, or transition metals such as cobalt, manganese, iron, nickel, vanadium, and the like.

The inorganic fiber may preferably have an average diameter between 0.001 and 1000 nm, and the porous, non-woven fiber may preferably have a thickness between 0.1 and 100 µm, an average pore size between 0.01 and 10 µm, and a porosity between 1 and 80%.

The electrochemical device may be a lithium secondary battery or a super capacitor.

### Advantageous Effects

A porous, non-woven fabric coating layer on the outer surface of an electrode according to the present description is made from an inorganic fiber of high thermal stability, and when an electrochemical device is overheated, the porous coating layer may prevent a short circuit between an anode and a cathode. Also, as opposed to a conventional porous coating layer containing an excessive amount of inorganic particles, the porous, non-woven fabric coating layer of the present description is made from a fiber-shaped inorganic material, having uniformly dispersed pores, which may contribute to performance improvement of an electrochemical device. Furthermore, the porous, non-woven fabric coating layer made from an ultra-fine inorganic fiber using electroemitting may achieve a thin layer, and may be used to manufacture a high capacity electrochemical device.

### BRIEF DESCRIPTION OF THE DRAWINGS

FIG. 1 is a scanning electron microscope (SEM) image illustrating a coating layer formed on an electrode according to example 1.
FIG. 2 is a SEM image illustrating a coating layer formed on an electrode according to example 2.
FIG. 3 is a SEM image illustrating a coating layer formed on an electrode according to comparative example 1.
FIG. 4 is a SEM image illustrating a coating layer formed on an electrode according to comparative example 2.

### BEST MODE

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation. Therefore, the description proposed herein is just a preferable example for the purpose of illustrations only, not intended to limit the scope of the invention.

The scope of the invention is defined in the claims.

A process for forming a porous, non-woven fabric coating layer of an inorganic fiber on the outer surface of an electrode according to the present invention is described as follows.

First, a sol solution containing a metal alkoxide compound is prepared (S1).

The metal alkoxide compound may include silicon-containing alkoxide, aluminum-containing alkoxide, or titanium-containing alkoxide, singularly or in combination. A metal of the metal alkoxide compound may be partially substituted by alkali metals or alkaline earth metals such as lithium, magnesium, barium, and the like, or transition metals such as cobalt, manganese, iron, nickel, vanadium, and the like, according to necessity.

The silicon-containing alkoxide may be, for example, tetra-alkyl-ortho-silicate (having 1 to 4 carbon atoms). The aluminum-containing alkoxide may be, for example, aluminum-sec-butoxide, aluminum isopropoxide, or aluminum ethoxide. The titanium-containing alkoxide may be, for example, titanium isopropoxide, or titanium alkyl alkoxide (having 1 to 4 carbon atoms). However, the present invention may use any metal alkoxide compound if it becomes a fiber-like material by a sol-gel reaction.

For electroemitting described below, a process for preparing the sol solution containing the metal alkoxide compound is well-known in the art. Typically, the sol solution containing the metal alkoxide compound may be prepared by mixing the metal alkoxide compound with a solvent, followed by sputtering, or by maturing through hydrolysis and condensation of an acidic component, such as hydrochloric acid and the like.

For example, Korean Patent No. 0596543 discloses a process for preparing a sol solution by maturing a solution of tetra-alkyl-ortho-silicate in ethanol. Also, Korean

Patent Publication No. 2009-0054385 teaches a process for preparing a sol solution by maturing a precursor solution including a silicon-containing alkoxide compound and a titanium-containing alkoxide compound.

A binder may be added to the sol solution according to necessity, and the following exemplary polymers may be used as the binder: polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyvinylalcohol, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, and the like. A low-molecular-weight compound having a molecular weight of 10,000 g/mol or less may be used as the binder.

Subsequently, a porous, non-woven coating layer of an inorganic fiber is formed by electroemitting the prepared sol solution onto the outer surface of an electrode active material layer formed on at least one surface of a current collector (S2).

Electroemitting of the sol solution is also well-known in the art. Electroemitting is a technique for supplying an electric charge by applying high voltage to the solution, and spraying the charged solution onto a substrate through an ultra-fine spray nozzle or a droplet-ejecting spray head. Electroemitting may include electrospinning or electrospraying. Korean Patent Publication No. 2009-0054385 discloses an electrospinning method using an electrospinning apparatus including an injector (a syringe pump) and an injection needle, a bottom electrode (a stainless steel drum for controlling a rotation rate), and a spinning voltage supplier, in which an adjusted distance between the end of the injection needle and the drum is between 5 and 30 cm, an adjusted spinning voltage is 15 kV or more, and an adjusted flow in the syringe pump is between 1 and 20 ml/hr. Also, Korean Patent No. 0271116 describes an electrospraying apparatus and method.

The electroemitting according to the present invention forms a non-woven coating layer of an inorganic fiber by locating an electrode on a substrate of an electroemitting apparatus, and electroemitting the prepared sol solution onto the outer surface of an electrode active material layer formed on at least one surface of a current collector of the electrode. In this instance, the porosity of the non-woven coating layer may be optimized by adjusting the injection intervals of the syringe pump, a delivery rate of the substrate, and the like, according to the well-known methods.

The electrode sprayed with the sol solution according to the present invention is not limited to a specific type of electrode, and the electrode may be fabricated by forming a layer of an electrode active material (that is, an electrode active material layer) on at least one surface of a current collector according to methods known in the art. In the electrode active material, a cathode active material may include typical cathode active materials for a cathode of conventional electrochemical devices, for example, lithium manganese oxides, lithium cobalt oxides, lithium nickel oxides, lithium iron oxides, or lithium composite oxides thereof, however the present invention is not limited in this regard. An anode active material may include typical anode active materials for an anode of conventional electrochemical devices, for example, lithium intercalation materials such as lithium metals, lithium alloys, carbon, petroleum coke, activated carbon, graphite, or other carbonaceous materials, however the present invention is not limited in this regard. As a non-limiting example, a current collector having a cathode active material layer may be a foil made from aluminum, nickel, or combinations thereof, and a current collector having an anode active material layer may be a foil made from copper, gold, nickel, copper alloys, or combinations thereof.

During electroemitting, a solvent included in the sol solution may be generally volatilized depending on the type of the solvent, and accordingly, a separate solvent drying process may be not needed. However, a separate solvent drying process may be performed to remove the solvent at room temperature or high temperature according to necessity.

According to necessity, to separate the polymer binder from the porous, non-woven coating layer, thermal treatment for decomposing the electrode having the porous, non-woven coating layer may be further performed. In this case, it is required to select the binder in the electrode active material layer and the polymer binder based on a decomposition temperature of the polymers.

The electrode fabricated by the above-described exemplary method includes:
(a) a current collector and an electrode active material layer formed on at least one surface of the current collector; and
(b) a porous, non-woven coating layer of an inorganic fiber formed on the outer surface of the electrode active material layer.

As well known, electroemitting of the sol solution containing the metal alkoxide compound may result in an inorganic fiber made from inorganic oxide or mixtures thereof, such as SiO₂, Al₂O₃, BaTiO₃, TiO₂, and the like, through adjustment of an emission density, and inorganic fibers are entangled to form a non-woven fabric having a plurality of uniformly dispersed pores. A metal of the inorganic oxide may be partially substituted by alkali metals or alkaline earth metals such as lithium, magnesium, barium, and the like, or transition metals such as cobalt, manganese, iron, nickel, vanadium, and the like. Also, the inorganic fiber may contain organic alcohols derived from metal alkoxide, a binder, and the like.

The non-woven fabric is formed directly on the electrode active material layer, and accordingly, it forms a coating layer of the electrode active material layer. The inorganic fiber formed by electroemitting is generally a nano-size inorganic fiber having a diameter between 1 and 100 nm, however in view of the recent technology trend, it may be a submicron-size inorganic fiber having a diameter between 1 and 1000 nm.

The inorganic non-woven fabric formed by electrospinning is comprised of a relatively long inorganic fiber, an inorganic non-woven fabric formed by electrospraying is comprised of a relatively short inorganic fiber, and they are connected to each other to form a mesh-type non-woven fabric. In particular, a porous, non-woven coating layer of an ultra-fine inorganic fiber formed by electroemitting may have a reduced thickness, and may be used to manufacture a high capacity electrochemical device.

In the electrode according to the present description the porous, non-woven coating layer may preferably have a thickness between 0.1 and 100 µm, and the non-woven fabric may preferably have an average pore size between 0.01 and 10 µm and a porosity between 1 and 80%.

The electrode of the present description may be applied to either or both a cathode and an anode. The porous, non-woven coating layer of the inorganic fiber interposed between a cathode and an anode may replace a conventional separator. Also, a conventional separator may be interposed between a cathode and an anode, and in this instance, even though the conventional separator thermally shrinks or melts due to overheating, the porous, non-woven coating layer of the inorganic fiber may prevent a short circuit between the cathode and the anode.

An electrochemical device of the present description may be any device in which an electrochemical reaction may occur, and include all kinds of batteries, for example, primary batteries, secondary batteries, fuel cells, solar cells or capacitors such as super capacitors. In particular, among the secondary batteries, lithium secondary batteries are preferred, for example, including lithium metal secondary batteries, lithium ion secondary batteries, lithium polymer secondary batteries, or lithium ion polymer secondary batteries.

An electrolyte useable in the electrochemical device includes a salt represented by the formula of A⁺B⁻, wherein A⁺ represents an alkali metal cation such as Li⁺, Na⁺, K⁺, or combinations thereof, and B⁻ represents an anion such as PF₆⁻, BF₄⁻, Cl⁻, Br⁻, I⁻, Cl0₄⁻, AsF₆⁻, CH₃CO₂⁻, CF₃SO₃⁻, N(CF₃SO₂)₂⁻, C(CF₂SO₂)₃⁻, or combinations thereof. The salt may be dissolved in an organic solvent such as propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (γ-butyrolactone), or their mixtures, however, the present invention is not limited thereto.

The electrolyte may be injected in a suitable step of a battery manufacturing process, depending on a manufacturing process and desired properties of a final product. In other words, the electrolyte may be injected before a battery assembly process, during a final step of the battery assembly process, or the like.

### EXAMPLES

Hereinafter, various preferred examples of the present invention will be described in detail for better understandings. However, the examples of the present invention may be modified in various ways, and they should not be interpreted as limiting the scope of the invention. The examples of the present invention are just for better understandings of the invention to persons having ordinary skill in the art.

### Example 1

5 g of aluminum tri-sec-butoxide was mixed with 18.98 ml of ethanol and 0.22 ml of water, and was matured while agitating at 60°C for 3 hours, followed by cooling at room temperature, to prepare a sol solution. Subsequently, the prepared sol solution was transferred through a pipe having an inner diameter of 0.5 mm at a flow rate of 100 µL/min using a syringe pump, and was electrosprayed onto an electrode (having a cathode active material layer formed on the outer surface of a current collector) while applying 10 kV, to form a coating layer.

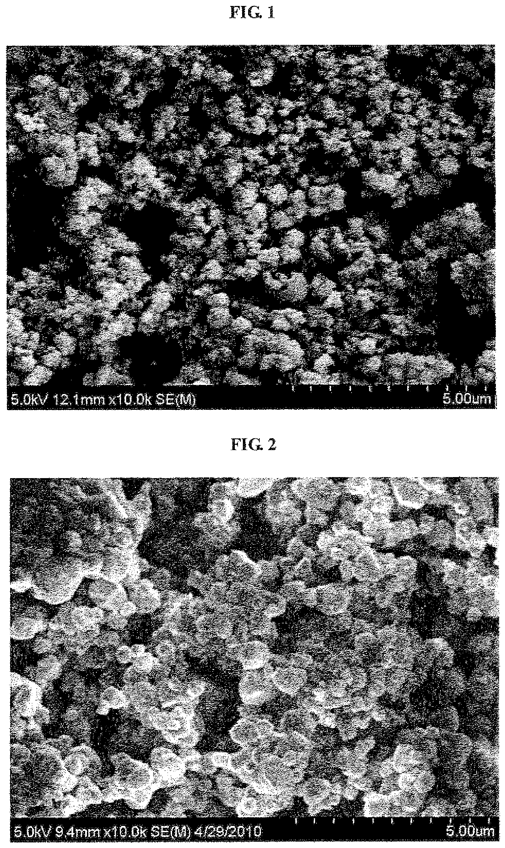

An SEM image of the formed coating layer is illustrated in FIG. 1. It was observed that a diameter of an inorganic fiber of Al₂O₃ comprising the coating layer was generally 100 nm or less.

### Example 2

5.1 g of barium acetate was dissolved in 12 ml of acetic acid, and was agitated for 2 hours. While being kept agitated, 5.9 mL of titanium isopropoxide was slowly added thereto, followed by 5 hour-agitation, to prepare a sol solution. Subsequently, the prepared sol solution was transferred through a pipe having an inner diameter of 0.5 mm at a flow rate of 100 µL/min using a syringe pump, and was electrosprayed onto an electrode (having a cathode active material layer formed on the outer surface of a current collector) while applying 10 kV, to form a coating layer.

An SEM image of the formed coating layer is illustrated in FIG. 2. It was observed that a diameter of an inorganic fiber of BaTiO₃ comprising the coating layer was generally 800 nm or less.

### Example 3

Aluminum tri-sec-butoxide, ethanol, and water were mixed at a mole ratio of 1:16:0.6, and were matured while agitating at 60°C for 1 hour, followed by cooling at room temperature, to prepare a sol solution. Subsequently, the sol solution, methanol, and water were mixed at a weight ratio of 1:0.2:0.003, were added with 3 volume% of acetic acid, and were agitated at room temperature for 30 minutes. Next, a 5 weight% aqueous solution of polyvinylalcohol was added thereto, followed by agitation at room temperature for 2 hours, to prepare a sol solution for electrospraying.

The prepared sol solution was transferred through a pipe having an inner diameter of 0.5 mm at a flow rate of 100 µL/min using a syringe pump, and was electrospun onto an electrode (having a cathode active material layer formed on the outer surface of a current collector) while applying 20 kV, to form a coating layer.

It was observed that a diameter of an inorganic fiber of Al₂O₃ comprising the coating layer was generally 300 nm or less.

### Example 4

1.275 g of barium acetate was dissolved in 3 ml of acetic acid, and was agitated for 2 hours. While being kept agitated, 1.475 mL of titanium isopropoxide was slowly added thereto. A solution of 10 weight% polyvinylpyrrolidone in ethanol was added thereto, followed by agitation at room temperature for 2 hours, to prepare a sol solution.

The prepared sol solution was transferred through a pipe having an inner diameter of 0.5 mm at a flow rate of 100 µL/min using a syringe pump, and was electrospun onto an electrode (having a cathode active material layer formed on the outer surface of a current collector) while applying 15 kV, to form a coating layer.

It was observed that a diameter of an inorganic fiber of BaTiO₃ comprising the coating layer was generally 300 nm or less.

### Comparative Example 1

After aramide was dissolved in dimethylacetamide to prepare a polymer solution, Al₂O₃ inorganic oxide particles having an average particle diameter of about 500 nm were added thereto such that a weight ratio of polymer:inorganic oxide is 8:2, followed by 6 hour-dispersion using a mixer.

Subsequently, the polymer solution having the inorganic oxide particles dispersed therein was transferred through a pipe having an inner diameter of 2 mm at a flow rate of 5 L/min using a syringe pump, and was electrospun onto an electrode (having a cathode active material layer formed on the outer surface of a current collector) for 5 minutes while applying 23 kV, to form a coating layer.

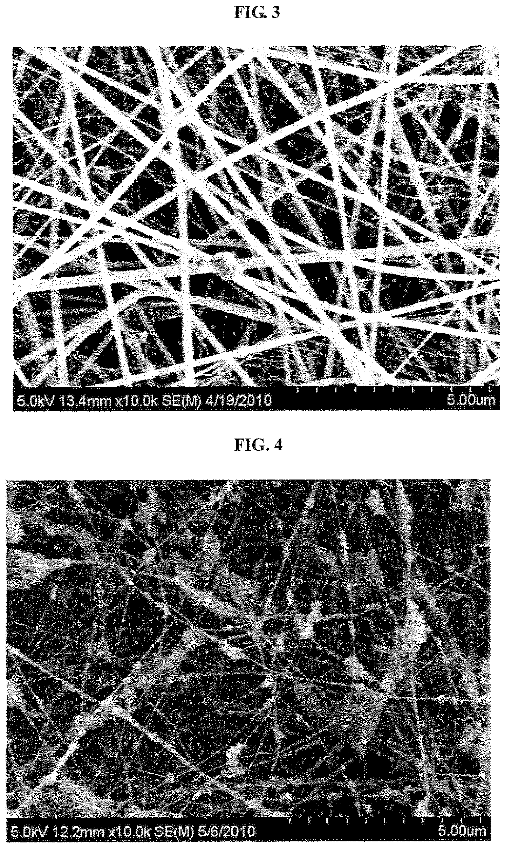

An SEM image of the formed coating layer is illustrated in FIG. 3. It was observed that a diameter of a fiber comprising the coating layer was generally 500 nm or less, but that the inorganic oxide particles were agglomerated rather than effectively dispersed.

### Comparative Example 2

After aramide was dissolved in dimethylacetamide to prepare a polymer solution, Al₂O₃ inorganic oxide particles having an average particle diameter of about 50 nm were added thereto such that a weight ratio of polymer:inorganic oxide is 2:1, followed by 6 hour-dispersion using a mixer.

Subsequently, the polymer solution having the inorganic oxide particles dispersed therein was transferred through a pipe having an inner diameter of 0.5 mm at a flow rate of 0.8 L/min using a syringe pump, and was electrospun onto an electrode (having a cathode active material layer formed on an outer surface of a current collector) for 20 minutes while applying 23 kV, to form a coating layer.

An SEM image of the formed coating layer is illustrated in FIG. 4. It was observed that a diameter of a fiber comprising the coating layer was generally 100 nm or less, but that the inorganic oxide particles were agglomerated rather than effectively dispersed.

## Claims

1. A method for manufacturing an electrode, the method comprising:
(S1) preparing a sol solution from a metal alkoxide compound; and
(S2) locating an electrode on a substrate of an electroemitting apparatus, and forming a porous, non-woven coating layer of an inorganic fiber by electroemitting the sol solution onto an outer surface of an electrode active material layer formed on at least one surface of a current collector of the electrode.

2. A method according to claim 1, wherein the metal alkoxide compound includes at least one of an alkali metal, an alkaline earth metal and a transition metal.

3. A method according to claim 1, wherein the metal alkoxide compound includes at least one of a silicon-containing alkoxide, an aluminum-containing alkoxide and a titanium-containing alkoxide.

4. A method according to claim 3, wherein the silicon-containing alkoxide is tetra-C₁₋₄ alkyl-ortho-silicate, the aluminum-containing alkoxide is at least one of aluminum-sec-butoxide, aluminum isopropoxide and aluminum ethoxide, and the titanium-containing alkoxide is titanium isopropoxide or titanium C₁₋₄ alkyl alkoxide.

5. A method according to claim 1, wherein the sol solution further contains a binder.

6. A method according to claim 5, wherein the binder is at least one of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyvinylalcohol, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, and a low-molecular-weight compound having a molecular weight of 10,000 g/mol or less.

7. A method according to claim 5, further comprising, after step (S2), performing a thermal treatment to decompose an organic component in the porous non-woven coating layer.

8. A method according to claim 1, wherein the electroemitting is electrospraying or electrospinning.

## Patentansprüche

1. Verfahren zur Herstellung einer Elektrode, wobei das Verfahren umfasst:
(S1) Herstellen einer Sollösung aus einer Metallalkoxidverbindung; und
(S2) Platzieren einer Elektrode auf einem Substrat einer elektroemittierenden Vorrichtung und Bilden einer porösen, Vliesstoff-Überzugsschicht aus einer anorganischen Faser durch Elektroemittieren der Sollösung auf einer äusseren Oberfläche einer Elektrodenaktivmaterialschicht, die auf zumindest einer Oberfläche eines Stromabnehmers der Elektrode gebildet ist.

2. Verfahren gemäss Anspruch 1, wobei die Metallalkoxidverbindung zumindest eines von einem Alkalimetall, einem Erdalkalimetall und einem Übergangsmetall einschliesst.

3. Verfahren gemäss Anspruch 1, wobei die Metallalkoxidverbindung zumindest eines von einem siliciumhaltigen Alkoxid, einem aluminiumhaltigen Alkoxid und einem titanhaltigen Alkoxid einschliesst.

4. Verfahren gemäss Anspruch 3, wobei das siliciumhaltige Alkoxid Tetra-C₁₋₄-alkyl-ortho-silicat ist, das aluminiumhaltige Alkoxid zumindest eines von Aluminiumsek-butoxid, Aluminiumisopropoxid und Aluminiumethoxid ist und das titanhaltige Alkoxid Titanisopropoxid oder Titan-C₁₋₄-alkylalkoxid ist.

5. Verfahren gemäss Anspruch 1, wobei die Sollösung ferner ein Bindemittel enthält.

6. Verfahren gemäss Anspruch 5, wobei das Bindemittel zumindest eines von Polyvinylidenfluorid-cohexafluorpropylen, Polyvinylidenfluorid-cotrichlorethylen, Polymethylmethacrylat, Polyacrylnitril, Polyvinylpyrrolidon, Polyvinylacetat, Polyvinylalkohol, Polyethylen-co-vinylacetat, Polyethylenoxid, Celluloseacetat, Celluloseacetatbutyrat, Celluloseacetatpropionat, Cyanoethylpullulan, Cyanoethylpolyvinylalkohol, Cyanoethylcellulose, Cyanoethylsaccharose, Pullulan, Carboxylmethylcellulose und einer niedermolekularen Verbindung mit einem Molekulargewicht von 10.000 g/mol oder weniger ist.

7. Verfahren gemäss Anspruch 5, das nach dem Schritt (S2) ferner die Durchführung einer Wärmebehandlung umfasst, um eine organische Komponente in der porösen Vliesstoff-Überzugsschicht zu zersetzen.

8. Verfahren gemäss Anspruch 1, wobei das Elektroemittieren Elektrosprühen oder Elektrospinnen ist.

## Revendications

1. Procédé de fabrication d'une électrode, le procédé comprenant :
(S1) la préparation d'une solution de type sol à partir d'un composé alcoxyde métallique ; et
(S2) la localisation une électrode sur un substrat d'un appareil électro-émetteur, et former une couche de revêtement non tissé poreux en une fibre inorganique en électro-émettant la solution de type sol sur une surface externe d'une couche de matériau actif d'électrode formée sur au moins une surface d'un collecteur de courant de l'électrode.

2. Procédé selon la revendication 1, dans lequel le composé alcoxyde métallique comprend au moins un parmi un métal alcalin, un métal alcalino-terreux et un métal de transition.

3. Procédé selon la revendication 1, dans lequel le composé alcoxyde de métal comprend au moins un parmi un alcoxyde contenant du silicium, un alcoxyde contenant de l'aluminium et un alcoxyde contenant du titane.

4. Procédé selon la revendication 3, dans lequel l'alcoxyde contenant du silicium est le tétra-alkyle en C₁₋₄-ortho-silicate, l'alcoxyde contenant de l'aluminium est au moins un parmi le sec-butoxyde d'aluminium, l'isopropoxyde d'aluminium et l'éthoxyde d'aluminium, et l'alcoxyde contenant du titane est l'isopropoxyde de titane ou l'alkyle en C₁₋₄-alcoxyde de titane.

5. Procédé selon la revendication 1, dans lequel la solution de type sol contient en outre un liant.

6. Procédé selon la revendication 5, dans lequel le liant est au moins un parmi le fluorure de polyvinylidène-co-hexafluoropropylène, le fluorure de polyvinylidène-co-trichloréthylène, le polyméthylméthacrylate, le polyacrylonitrile, la polyvinylpyrrolidone, le polyvinylacétate, l'alcool polyvinylique, le polyéthylène-co-acétate de vinyle, l'oxyde de polyéthylène, l'acétate de cellulose, le butyrate d'acétate de cellulose, le propionate d'acétate de cellulose, l'acétopropionate de cellulose, le cyanoéthylpullulane, l'alcool cyanoéthylpolyvinylique, la cyanoéthylcellulose, le cyanoéthylsucrose, le pullulane, la carboxyméthylcellulose, et un composé de bas poids moléculaire ayant un poids moléculaire inférieur ou égal à 10 000 g/mol.

7. Procédé selon la revendication 5, comprenant en outre, après l'étape (S2), l'exécution d'un traitement thermique pour décomposer un composant organique dans la couche de revêtement non-tissé poreux.

8. Procédé selon la revendication 1, dans lequel l'électro-émission est une électro-pulvérisation ou une électro-filature.
